# EUROPEAN PATENT APPLICATION

(11) **EP 2 312 886 A1**
(43) Date of publication of application: **20.04.2011**
(21) Application number: 09805087.5
(22) Date of filing: 10.08.2009
(51) Int. Cl.: H04W 36/18

(54) **METHOD FOR COOPERATIVE COMMUNICATIONS AMONG BASE STATIONS**

(30) Priority: 08.08.2008 CN 200810146047
(71) Applicant: Sharp Kabushiki Kaisha, Osaka-shi, Osaka 545-8522 (JP)
(72) Inventor: DING, Ming, Shanghai 201203 (CN); LIU, Renmao, Shanghai 201203 (CN); HUANG, Lei, Shanghai 201203 (CN); CHEN, Chen, Shanghai 201203 (CN); SUN, Guolin, Shanghai 201203 (CN)
(74) Representative: Müller - Hoffmann & Partner
(86) International application number: PCT/JP2009/064138
(87) International publication number: WO 2010/016607

(57) **Abstract**

A method for cooperative communications among base stations according to the present invention includes: a first step in which a serving base station determines whether a user device is in an mode of cooperative communications among the base stations; a second step in which the serving base station uses a downlink control signal to make configuration for the user device; a third step in which the user device obtains (i) system information regarding the serving base station and a cooperative communication base station indicated by configuration information received and (ii) channel state information; a fourth step in which the user device feeds back channel state information regarding downlink channels between the user device and the serving base station and between the user device and the cooperative communication base station; a fifth step in which the serving base station carries out resource scheduling and backhaul communications in accordance with the channel state information thus fed back; and a sixth step in which the user device receives an allocation instruction to allocate downlink resources.

## Description

### Technical Field

The present invention relates, in the field of communication technology, to: methods for cooperative communications among multiple multi-antenna base stations; and base stations that utilize such a method. Specifically, the present invention relates to: a method for improving the transmission rate of downlink data by means of cooperative communications among multiple multi-antenna base stations in the downlink of a cellular system; and a base station that utilizes such a method.

### Background Art

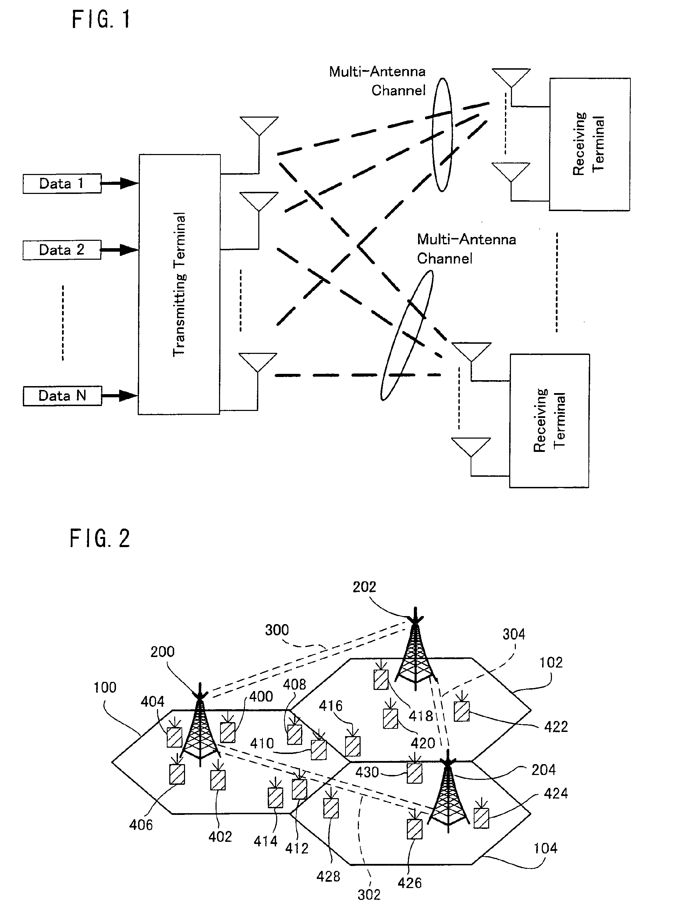

Multi-antenna (MIMO: multiple-input and multiple-output) wireless communication technology is the installation of a plurality of antennas at both the transmitting and receiving terminals to utilize spatial resources during wireless communications to bring about a spatial multiplexing effect and a space diversity effect. Studies have demonstrated that according to the theory of information, the capacity of a MIMO system increases linearly with an increase in minimum value of the number of transmitting antennas and the number of receiving antennas. Fig. 1 is a diagram schematically showing a MIMO system. As shown in Fig. 1, multi-antenna wireless channels constituted by multiple antennas at both the transmitting and receiving terminals contain spatial information. It should be noted that orthogonal frequency division multiplexing (OFDM) technology is applied to high-speed data communications in both multipath environments and fading environments because of its characteristic of being strong in anti-fading ability and its characteristic of being high in efficiency in the use of frequencies. MIMO-OFDM technology, which is a combination of MIMO technology and OFDM technology, has been recognized as a technique that is core to the next-generation mobile communication systems.

For example, the 3GPP (3rd Generation Partnership Project) organization has been playing an important role as an international organization in the field of mobile communications technology in standardizing the 3G (3rd generation) cellular system. The 3GPP organization has been undertaking the design of EUTRA (Evolved Universal Terrestrial Radio Access) and EUTRAN (Evolved Universal Terrestrial Radio Access Network) since the second half of 2004, and this project is also called Long Term Evolution (LTE). MIMO-OFDM technology has been utilized for the downlink of an LTE system. In April 2008, the 3GPP organization held a conference in Shenzhen, China to discuss the standardization of the 4G (4th generation) cellular system. In this conference, the concept "cooperation among multiple multi-antenna base stations" attracted a wide range of attention and gained support. The core idea of the concept is that multiple base stations provide communication services to a single user or multiple users simultaneously to improve the transmission rate of data to a user at a cell border.

Three methods for cooperative communications among multiple multi-antenna base stations for a cellular system downlink have been known as conventional technologies.
(1) Method Based on Concentrated Signals: A mobile station selects a directional diagram (antenna directivity pattern) in accordance with information such as the positions of the mobile station and a distributed base station, etc. The directional diagram shows a plurality of directivities from antennas of different base stations that are comparatively strong in electric field. The distributed base station selects the antenna directivity pattern of an appropriate base station in accordance with the specific geographical position of the mobile station, carries out a concentrated operation while cooperatively communicating with the antenna of the base station, and forms a concentrated electric field around the mobile station. This allows the antenna of the mobile station to be located in a place that is comparatively strong in electric field (see Patent Literature 1).
(2) Method Based on Virtual MIMO Technology: By imagining a plurality of antennas of multiple base stations as a single-base-station MIMO system including a lager number of antennas, comparatively high levels of spatial multiplexing effect and space diversity effect can be attained. It should be noted that the configuration of repeated use of a single-base-station MIMO system can reduce the complexity with which a multiple multi-antenna base station system is realized (see Non-patent Literature 1).
(3) Method Based on Independent Operation of a Single Base Station: A single base station including multiple antennas provides services to a user device (mobile station) independently, and the user device accumulates plural pieces of data from the single base station, whereby comparatively high levels of spatial multiplexing effect and space diversity effect can be attained. This method is easy to realize and small in signaling output (see Non-patent Literature 2).

### Citation List

### Patent Literature 1

Chinese Patent No. CN101047415 (Application Date: May 8, 2007)

### Non-patent Literature 1

3GPP Document, No. R1-082501, "Collaborative MIMO for LTE-A downlink", Alcatel-Lucent, 3GPP TSG RAN WG1 Meeting #53bis, Warsaw, Poland, June 30 through July 4, 2008

### Non-patent Literature 2

3GPP Document, No. R1-082497, "Network MIMO Precoding", Texas Instrument, Inc., 3GPP TSG RAN WG1 Meeting #53bis, Warsaw, Poland, June 30 through July 4, 2008

### Summary of Invention

### Technical Problem

However, the method (1) merely realizes cooperative communications among multiple multi-antenna base stations in terms of energy. Further, since the performance of a system also has a close relationship with geographical positions, the method (1) has a limited range of applications.

The method (2), which lays disproportionate emphasis on conceptual descriptions, fails to disclose important issues such as the configuration of users (mobile stations) among multiple multi-antenna base stations, feedback from users (mobile stations), etc.

The method (3), which has the advantage of being easy to realize, presents such a problem that a completely independent single base station cannot operate to take advantage of cooperative communications among multiple multi-antenna base stations and therefore deteriorates in performance.

The present invention has been made in view of the foregoing problems, and it is an object of the present invention to provide: a method for cooperative communications among a plurality of base stations for a cellular system downlink; and a base station.

### Solution to Problem

A method for cooperative communications among base stations according to the present invention is a method for cooperative communications among base stations for a cellular system downlink, the method including: a first step in which a serving base station determines whether a user device is in an mode of cooperative communications among the base stations; a second step in which the serving base station uses a downlink control signal to make configuration for the user device; a third step in which the user device obtains (i) system information regarding the serving base station and a cooperative communication base station indicated by configuration information received and (ii) channel state information; a fourth step in which the user device feeds back channel state information regarding downlink channels between the user device and the serving base station and between the user device and the cooperative communication base station; a fifth step in which the serving base station carries out resource scheduling and backhaul communications in accordance with the channel state information thus fed back; and a sixth step in which the user device receives an allocation instruction to allocate downlink resources.

Further, it is preferable that in the first step, the serving base station specify the user device in accordance with at least one of the following: the geographical position of the user device; the path loss in the user device; and the amount of downlink communication data stored in a transmission buffer memory in which downlink communication data is stored.

Further, it is preferable that in the second step, the configuration information contain at least the cell number of the cooperative communication base station and a transmission method by which the cooperative communication base station transmits downlink communication data to the user device.

Alternatively, it is preferable that in the second step, the configuration information contain at least the cell number of the cooperative communication base station and information regarding the installation of antennas at the cooperative communication base station.

Further, it is preferable that in the third step, the system information that is obtained by the user device regarding the serving base station and the cooperative communication base station contain at least information regarding the installation of antennas at both the serving base station and cooperative communication base station.

Alternatively, it is preferable that in the third step, the user device obtain the system information regarding the serving base station through a broadcast channel of the serving base station and obtains the system information regarding the cooperative communication base station through a broadcast channel of the cooperative communication base station.

Alternatively, it is preferable that in the third step, the user device obtain the system information regarding the serving base station through a broadcast channel of the serving base station and, in the second step, obtains the system information regarding the cooperative communication base station in accordance with the configuration information.

Further, it is preferable that in the fourth step, the user device feed back the channel state information only to the serving base station.

Alternatively, it is preferable that in the fourth step, the user device feeds back the channel state information to the serving base station and the cooperative communication base station respectively.

Further, it is preferable that in the fifth step, the serving base station receives the channel state information from the user device.

Alternatively, it is preferable that in the fifth step, the cooperative communication base station transmits the channel state information to the serving base station through the backhaul communications.

Alternatively, it is preferable that in the fifth step, the backhaul communications contain data that the serving base station transmits to the cooperative communication base station, the data containing at least a result of the resource scheduling and downlink communication data.

Further, it is preferable that in the sixth step, the user device receives the resource allocation instruction from the serving base station, the resource allocation instruction containing at least one of the following: information regarding the assignment of the downlink resources; and precoding information necessary for the serving base station to transmit data.

Alternatively, it is preferable that in the sixth step, the user device receives the resource allocation instruction from the serving base station, the resource allocation instruction containing at least one of the following: information regarding the assignment of the downlink resources; precoding information necessary for the serving base station to transmit data; and precoding information necessary for the cooperative communication base station to transmit data.

Alternatively, it is preferable that in the sixth step, the user device receives the resource allocation instruction from the serving base station and the cooperative communication base station, the resource allocation instruction containing at least one of the following: information regarding the assignment of the downlink resources; and precoding information necessary for the serving base station and the cooperative communication base station to transmit data.

Additional objects, features, and strengths of the present invention will be made clear by the description below. Further, the advantages of the present invention will be evident from the following explanation in reference to the drawings.

### Advantageous Effects of Invention

A method for cooperative communications among multiple multi-antenna base stations for a cellular system downlink according to the present invention and a base station according to the present invention have advantages such as: the inclusion of a user device, a user's feedback, content such as a resource allocation instruction; a wide range of applications; rational signaling; ease of realization; etc.

### Brief Description of Drawings

### Fig. 1

Fig. 1 is a diagram schematically showing a MIMO system.

### Fig. 2

Fig. 2 is a diagram schematically showing a multi-cell cellular communication system.

### Fig. 3

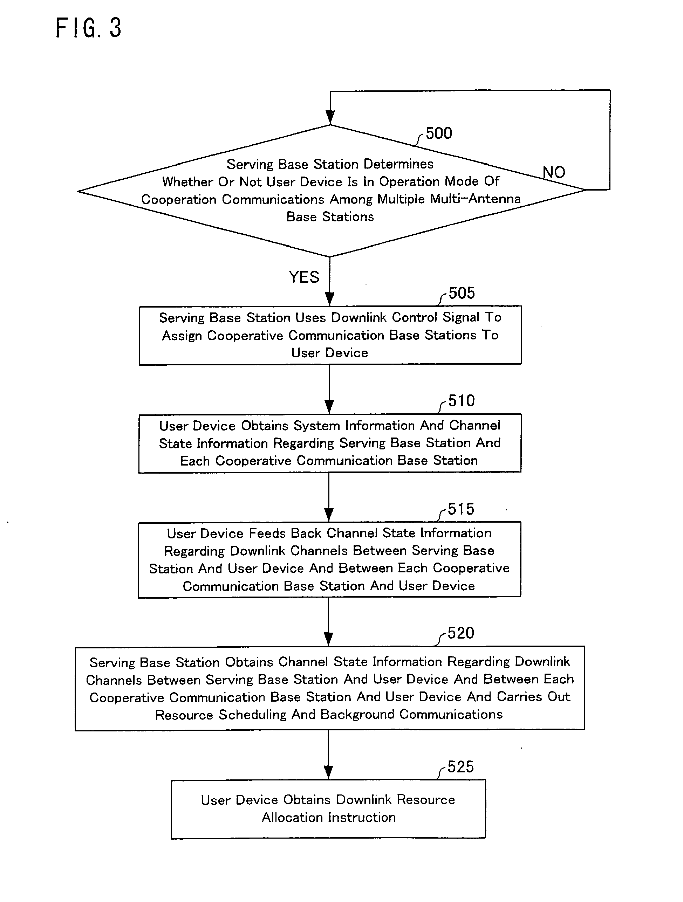

Fig. 3 is a flow chart showing a method for cooperative communications among multiple multi-antenna base stations for a cellular system downlink according to an embodiment of the present invention.

### Fig. 4

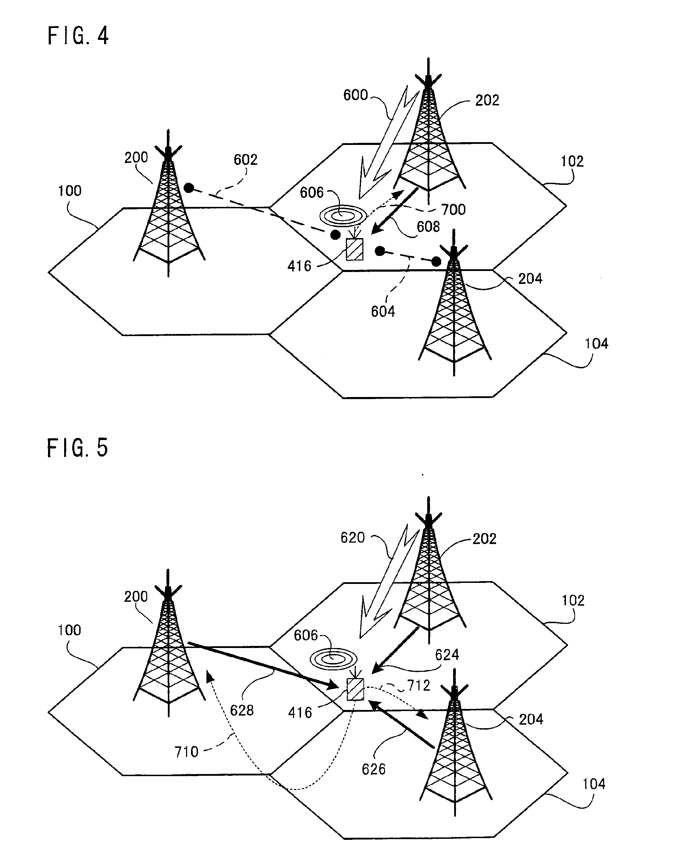

Fig. 4 is a diagram schematically showing Applied Example 1 of an embodiment of the present invention.

### Fig. 5

Fig. 5 is a diagram schematically showing Applied Example 2 of an embodiment of the present invention.

### Fig. 6

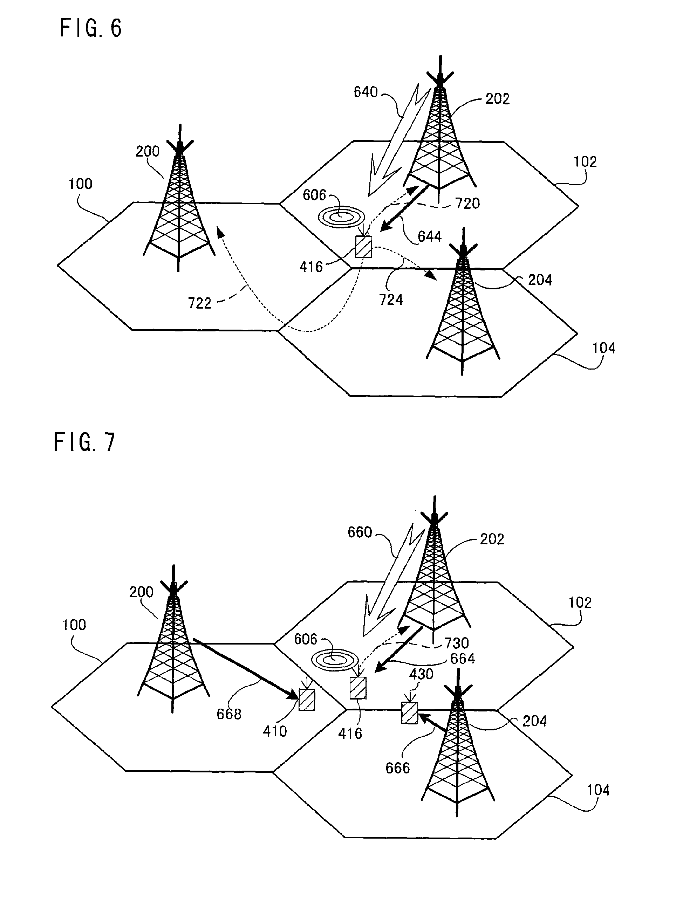

Fig. 6 is a diagram schematically showing Applied Example 3 of an embodiment of the present invention.

### Fig. 7

Fig. 7 is a diagram schematically showing Applied Example 4 of an embodiment of the present invention.

### Fig. 8

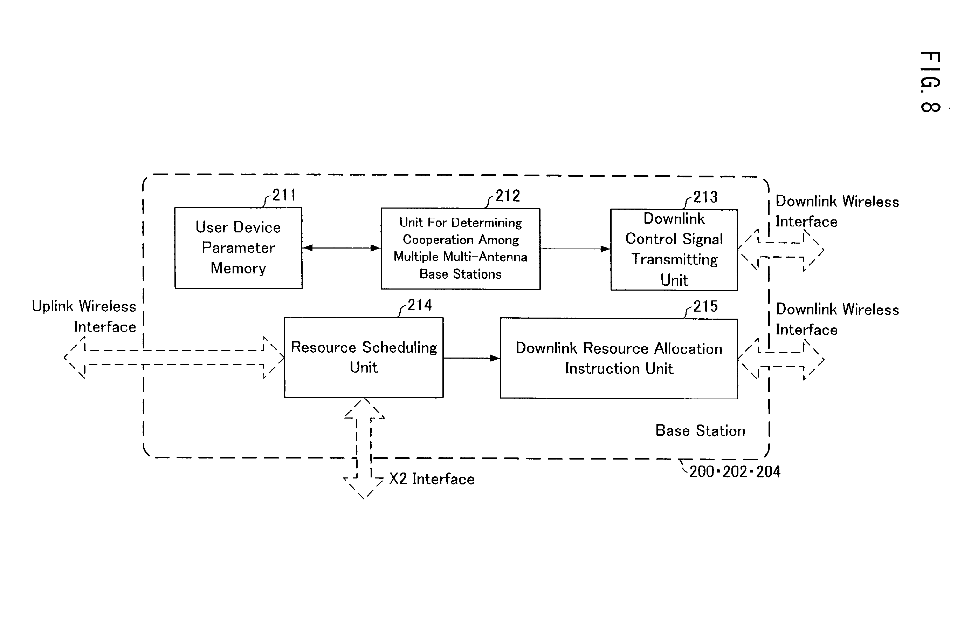

Fig. 8 is a diagram schematically showing a base station that realizes a method for cooperative communications among multiple multi-antenna base stations in for a cellular system downlink according to an embodiment of the present invention.

### Description of Embodiments

Preferred embodiments of the present invention are described in detail below with reference to the drawings. Those components and functions which are not needed for describing the present invention are not described below lest the understanding of the present invention is prevented in the course of description.

The step of realizing the present invention is described closely and clearly by describing below a specific embodiment of the present invention which is applied to an LTE cellular communication system. A communication system of the present invention serves to transmit downlink communication data (downlink data) to a user device (mobile station) through a plurality of base stations including a serving base station. Further, a method for cooperative communications among base stations according to the present invention is a method by which multiple base stations cooperate in such a communication system. The downlink communication data is a collective term for downward data that are transmitted from a base station to a mobile station (user device). Examples of the downlink communication data include audio data, image data, moving-image data, and text data; however, the downlink communication data is not particularly limited in content. It should be noted that the present invention is not limited to the embodiment and can be applied to other communication systems.

Fig. 2 is a diagram schematically showing a multi-cell cellular communication system. The cellular system divides a service coverage area into adjacent wireless coverage areas, i.e., cells. As shown in Fig. 2, each cell is represented by a regular hexagon, and the whole service area is formed by joining cells 100 to 104 together.

Base stations 200 to 204 are associated with the cells 100 to 104, respectively. Each of the base stations 200 to 204 includes a transmitter, a receiver, and a base station control unit, which are publicly known in this technical field. As shown in Fig. 2, each of the base stations 200 to 204, put in their respective areas, i.e., put in the cells 100 to 104 respectively, includes at least one omnidirectional antenna. However, the distribution of the cells within the cellular communication system may be such that at least one omnidirectional antenna is configured for the base stations 200 to 204 and given a directivity to cover a partial area of the cells 100 to 104. Such a partial area is generally called a sector region. It should be noted that the cellular communication system having multiple cells, shown in Fig. 2, which has multiple cells serves solely to describe the present invention and that the implementation of a cellular system of the present invention should not be limited to the aforementioned specific conditions.

As shown in Fig. 2, the base stations 200 to 204 can communicate with one another through X2 interfaces 300 to 304. In an LTE system, a three-layer node network structure including a base station, a wireless network control unit, and a core network is simplified as a two-layer node structure. In such a structure, the base station functions as a wireless network control unit, and the base station communicates and cooperates with another base station through a cable interface called "X2".

As shown in Fig. 2, the cells 100 to 104 have several user devices (mobile stations) 400 to 430 distributed thereamong. Each of the user devices 400 to 430 includes a transmitter, a receiver, and a mobile station control unit, which are publicly known in this technical field. Further, each of the user devices 400 to 430 includes a plurality of antennas for receiving data transmitted from the plurality of base stations. Each of the user devices 400 to 430 accesses the cellular communication system through a serving base station (one of the base stations 200 to 204) that provides services to the user device.

The user devices are so-called mobile station devices examples of which include cellular phones, PDA (personal digital assistants), portable personal computers, and portable game machines.

Although Fig. 2 has only sixteen user devices disposed therein, the number of user devices that are actually disposed is enormous. Therefore, the user devices drawn in Fig. 2 are a schematic representation for describing the present invention.

Further, the user devices 400 to 430 access the cellular communication system through the base stations 200 to 204 that provide services to them, respectively. A base station that provides communication services directly to a user device is called a serving base station (Serving eNodeB) for the user device, and the other base stations are called non-serving base stations for the user device. The non-serving base stations can serve for the serving base station as cooperative communication base stations to provide communication services to the user together with the serving base station.

For a specific configuration of the LTE system of the present embodiment, refer to the 3GPP organization's document: TS, 36. 213, V8. 3. 0 "Evolved Universal Terrestrial Radio Access(E-UTRA); Physical Layer Procedures". This document defines seven types of downlink data transmission method as follows: single-antenna transmission (which is a special exception to a MIMO system where signals are transmitted using one antenna. This method is used to transmit only single-layer data.); transmission diversity (by which, in a MIMO system, signals are transmitted using the diversity effect of time and/or frequency to improve the reception quality of signals. This method is used to transmit only single-layer data.); open-loop space-division multiplexing (which is space-division multiplexing that does not require feedback of channel state information from a user device); closed-loop space-division multiplexing (which is space-division multiplexing that requires feedback of channel state information from a user device); multi-user MIMO (by which multiple users participate in downlink communication at the same time and at the same frequency in a MIMO system); closed-loop single-layer precoding (which is the use of a precoding technique in a MIMO system to transmit only single-layer data); beamforming transmission (which is the use of a beamforming technique in a MIMO system to transmit only single-layer data); etc.

In the description regarding the present embodiment, such a method for cooperative communications among multiple multi-antenna base stations is adopted as follows: Only single-layer data is transmitted between a serving base station for a user device and a cooperative communication base station. Therefore, the serving base station and the cooperative communication base station can select six out of the downlink data transmission methods, namely single-antenna transmission, transmission diversity, single-layer open-loop space-division multiplexing, closed-loop single-layer precoding, single-layer multi-user MIMO, beamforming, etc. It should be noted that when different base stations transmit similar single-layer data, space diversity (also called macro diversity) is formed among the base stations. Alternatively, when different base stations transmit different single-layer data, spatial multiplexing is formed among the base stations. It should be noted here that although use of such a method for cooperative communications among multiple multi-antenna base stations as described above is taken as a specific embodiment according to the present invention, the present invention should not be limited to the aforementioned specific conditions in the course of implementation.

Fig. 3 is a flow chart showing a method for cooperative communications among multiple multi-antenna base stations for a cellular system downlink according to an embodiment of the present invention. As shown in Fig. 3, a method according to an embodiment of the present invention includes such steps as follows:
Step 500: A serving base station determines whether or not a user device is in an operation mode of cooperation communications among multiple multi-antenna base stations (specifying step).

In determining whether or not the user device is in an operation mode of cooperation communications among multiple multi-antenna base stations, the serving base station uses at least one of the following as an element of determination: the geographical position of the user device, the path loss in the user device, and the buffer status of downlink data in the user device. However, these parameters are merely those taken as examples, and the present invention should not be limited to these parameters. For example, an average technician in this technical field will be able to select other appropriate parameters as needed in accordance with future advanced technology.

In the present embodiment, the user devices 400 to 414 in the base station 200 cell of the multi-cell cellular system as shown in Fig. 2 are divided into a plurality of groups according to the value of path loss from each user device to the base station 200. For example, the user devices 400 to 406 are classified as central user devices, and the user devices 408 to 414 are classified as border user devices.

In the base station 202 cell, the user devices 416 to 422 are divided into a plurality of groups according to the value of path loss from each user device to the base station 202. For example, the user devices 418 to 422 are classified as central user devices, and the user device 416 is classified as a border user device.

In the base station 204 cell, the user devices 424 to 430 are divided into a plurality of groups according to the value of path loss from each user device to the base station 204. For example, the user devices 424 to 426 are classified as central user devices, and the user device 428 to 430 are classified as border user devices.

It should be noted here that the classification of user devices into central user devices and border user devices according the value of path loss from each user device to a base station serves solely to give an example where an appropriate user device is selected to be in an operation mode of cooperation communications among multiple multi-antenna base stations, and that it is not necessary to necessarily carry out the above-described grouping process in determining whether or not a user device is in the operation mode of cooperation communications among multiple multi-antenna base stations.

If the serving base station determines that all the border user devices are in an operation mode of cooperation communications among multiple multi-antenna base stations, the user device 416 is found, in the case of the base station 202, to be in an operation mode of cooperation communications among multiple multi-antenna base stations. It should be noted here that such selection as described above of a user device that is in an operation mode of cooperation communications among multiple multi-antenna base stations is merely taken as an example where the user device has switched into an operation mode of cooperation communications among multiple multi-antenna base stations. Determination as to whether or not a user device is in an operation mode of cooperation communications among multiple multi-antenna base stations should not be limited to the aforementioned specific conditions in the course of implementation of the present invention.

Alternatively, the serving base station may determine that all the border user devices in which the amount of downlink data stored in a downlink data transmission buffer memory is larger than a threshold value K are in an operation mode of cooperation communications among multiple multi-antenna base stations. If, in the case of the base station 202 taken as an example, the amount of downlink data stored in a transmission buffer memory in which downlink data to be transmitted to the user device 416 is stored is determined to be larger than the threshold value K, it means that the user device 416 is in an operation mode of cooperation communications among multiple multi-antenna base stations.

It should be noted here that such selection as described above of a user device that is in an operation mode of cooperation communications among multiple multi-antenna base stations is merely taken as an example where the user device has switched into an operation mode of cooperation communications among multiple multi-antenna base stations. Determination as to whether or not a user device is in an operation mode of cooperation communications among multiple multi-antenna base stations should not be limited to the aforementioned specific conditions in the course of implementation of the present invention.

Step 505: The serving base station uses a downlink control signal to configure (assign) cooperative communication base stations for (to) the user device (first transmitting step).

It is preferable that the downlink control signal have configuration information containing at least the cell number of each cooperative communication base station and a transmission method by which each cooperative communication base station transmits downlink data.

Alternatively, it is preferable that the downlink control signal have configuration information containing at least the cell number of each cooperative communication base station and information regarding the installation of antennas at each cooperative communication base station. Examples of information regarding the installation of antennas includes the number of transmitting antennas at the serving base station and the number of transmitting antennas at each of the other base stations, i.e., the cooperative communication base stations.

The present embodiment is described below with reference to four applied examples.

Applied Example 1: The configuration information of a downlink control signal that is transmitted by the serving base station contains the cell number of each cooperative communication base station and a transmission method by which each cooperative communication base station transmits downlink data. The appearance of this implementation is schematically shown in Fig. 4. Fig. 4 assumes that the base station 202 serves as a serving base station for the user device 416 and that the base stations 200 and 204 serve as cooperative communication base stations for the user device 416. It is also assumed that the transmission method by which the cooperative communication base station 200 transmits downlink data is transmission diversity and that the transmission method by which the cooperative communication base station 204 transmits downlink data is single-layer open-loop space-division multiplexing. Accordingly, the serving base station 202 uses a downlink control signal 600 to transmit to the user device 416 configuration information, according to the multiple multi-antenna base station method, which contains the respective cell numbers of the base stations 200 and 204 and the respective transmission methods by which the base stations 200 and 204 transmit downlink data.

It should be noted that the transmission method by which the base stations 202, i.e., the serving base station, transmits downlink data may be notified to the user device 416 when the downlink control signal is transmitted to the user device 416, may be determined in advance, or may be notified to the user device 416 at an appropriate timing after the user device 416 enters the cell 102 of the base station 202.

Applied Example 2: The configuration information of a downlink control signal that is transmitted by the serving base station contains the cell number of each cooperative communication base station, a transmission method by which each cooperative communication base station transmits downlink data, and information regarding the installation of antennas at each cooperative communication base station. The appearance of this implementation is schematically shown in Fig. 5. Fig. 5 assumes that the base station 202 serves as a serving base station for the user device 416 and that the base stations 200 and 204 serve as cooperative communication base stations for the user device 416. It is also assumed that the cooperative communication base station 200 employs closed-loop single-layer precoding as its downlink data transmission method and has four transmitting antennas configured therefor and that the cooperative communication base station 204 employs beamforming transmission as its downlink data transmission method and has four transmitting antennas configured therefor. Accordingly, the serving base station 202 uses a downlink control signal 620 to transmit to the user device 416 configuration information, according to the multiple multi-antenna base station method, which contains the respective cell numbers of the base stations 200 and 204, the respective transmission methods by which the base stations 200 and 204 transmit downlink data, and information regarding the installation of antennas at the base stations 200 and 204.

Applied Example 3: The configuration information of a downlink control signal that is transmitted by the serving base station contains the cell number of each cooperative communication base station and information regarding the installation of antennas at each cooperative communication base station. The appearance of this implementation is schematically shown in Fig. 6. Fig. 6 assumes that the base station 202 serves as a serving base station for the user device 416 and that the base stations 200 and 204 serve as cooperative communication base stations for the user device 416. Further, if the serving base station 202 and the cooperative communication base stations 200 and 204 are accepted silently as being identical in downlink data transmission method to each other and the serving base station 202 and the cooperative communication base stations 200 and 204 all employ closed-loop single-layer precoding, it is no longer necessary to notify the user device 416 of the transmission method by which any cooperative communication base station transmits downlink data.

Accordingly, the serving base station 202 uses a downlink control signal 640 to transmit to the user device 416 configuration information, according to the multiple multi-antenna base station method, which contains the respective cell numbers of the base stations 200 and 204 and information regarding the installation of antennas at the base stations 200 and 204. It should be noted that each of the cooperative communication base stations 200 and 204 has four transmitting antennas configured therefor.

Applied Example 4: The configuration information of a downlink control signal that is transmitted by the serving base station contains the cell number of each cooperative communication base station and information regarding the installation of antennas at each cooperative communication base station. The appearance of this implementation is schematically shown in Fig. 7. Fig. 7 assumes that the base station 202 serves as a serving base station for the user device 416 and that the base stations 200 and 204 serve as cooperative communication base stations for the user device 416. It is also assumed that the serving base station 202 and the cooperative communication base stations 200 and 204 are accepted silently as being identical in downlink data transmission method to each other and that the serving base station 202 and the cooperative communication base stations 200 and 204 all employ single-layer multi-user MIMO. The user devices 416, 410, 430 constitute a single multi-user group. This makes it no longer necessary to the user device 416 of the transmission method by which any cooperative communication base station transmits downlink data. Accordingly, the serving base station 202 uses a downlink control signal 660 to transmit to the user device 416 configuration information, according to the multiple multi-antenna base station method, which contains the respective cell numbers of the base stations 200 and 204 and information regarding the installation of antennas at the base stations 200 and 204. It should be noted that each of the cooperative communication base stations 200 and 204 has four transmitting antennas configured therefor.

It should be noted here that Applied Examples 1 to 4 above are embodiments according to the configuration information of a downlink control signal that is transmitted by the serving base station in the present invention. It should be noted that the configuration information of a downlink control signal that is transmitted by the serving base station in the present invention should not be limited to Applied Examples 1 to 4 above.

Step 510: The user device obtains (i) system information regarding the serving base station and each cooperative communication base station indicated by configuration information received and (ii) channel state information (obtaining step)

It is preferable that the system information as obtained by the user device regarding the serving base station and each cooperative communication base station contain at least information regarding the installation of antennas at the serving base station and each cooperative communication base station.

It is preferable that the system information as obtained by the user device regarding the serving base station and each cooperative communication base station be system information regarding the serving base station as obtained by the user device through a broadcast channel of the serving base station and system information regarding each cooperative communication base station as obtained by the user device through a broadcast channel of that cooperative communication base station.

It is preferable that the system information as obtained by the user device regarding the serving base station and each cooperative communication base station be system information regarding the serving base station as obtained by the user device through a broadcast channel of the serving base station and system information regarding each cooperative communication base station as obtained by the user device in accordance with the configuration information of the downlink control signal transmitted in Step 505.

Having obtained system information regarding the serving base station and each cooperative communication base station, the user device obtains channel state information regarding the serving base station and each cooperative communication base station by detecting downlink reference signals from the serving base station and each cooperative communication base station. Then, the user device transmits the channel state information thus obtained to the serving base station (and each cooperative communication base station).

Specifically, the user device measures the state of the channels from the state of reception of the downlink reference signals and generates channel state information indicative of a result of the measurement. Further, the user device may compute, from the state of reception of the downlink reference signals, a preferred transmission mode containing a MIMO spatial multiplexing order, a receivable transmission rate, etc. and transmit a result of the computation to the serving base station (and each cooperative communication base station) as channel state information.

The present embodiment is described below with reference to four applied examples.

Applied Example 1: The user device obtains system information regarding the serving base station and containing at least information regarding the installation of antennas at the serving base station through the broadcast channel of the serving base station, and obtains system information regarding each cooperative communication base station and containing at least information regarding the installation of antennas at each cooperative communication base station through the broadcast channel of that cooperative communication base station. Then, the user device obtains channel state information regarding the serving base station and each cooperative communication base station in accordance with downlink reference signals from the serving base station and each cooperative communication base station.

The appearance of this implementation is schematically shown in Fig. 4. Fig. 4 assumes that the base station 202 serves as a serving base station for the user device 416 and that the base stations 200 and 204 serve as cooperative communication base stations for the user device 416. It is also assumed that the transmission method by which the cooperative communication base station 200 transmits downlink data is transmission diversity and that the transmission method by which the cooperative communication base station 204 transmits downlink data is single-layer open-loop space-division multiplexing. In general, the user device 416 obtains system information regarding the serving base station through the broadcast channel of the serving base station 202, and the system information contains at least information regarding the installation of four transmitting antennas at the base station 202. This is a step that must be carried out in the case of cellular communication and, as such, is not described here in detail.

In Fig. 4, the user device 416 obtains system information regarding the base station 200 through the broadcast channel (indicated by a dotted line 602) of the base station 200, and the system information contains at least information regarding the installation of four transmitting antennas at the base station 200. Further, the user device 416 obtains system information regarding the base station 204 through the broadcast channel (indicated by a dotted line 604) of the base station 204, and the system information contains at least information regarding the installation of four transmitting antennas at the base station 204.

After that, the user device 416 obtains channel state information (indicated by a reference signal detecting process 606) regarding the serving base station and each cooperative communication base station by detecting downlink reference signals from the serving base station and each cooperative communication base station.

Applied Example 2: The user device obtains system information regarding the serving base station and containing at least information regarding the installation of antennas at the serving base station through the broadcast channel of the serving base station, and obtains system information regarding each cooperative communication base station and containing at least information regarding the installation of antennas at each cooperative communication base station in accordance with the configuration information of the downlink control signal transmitted in Step 505.

Then, the user device obtains channel state information regarding the serving base station and each cooperative communication base station in accordance with downlink reference signals from the serving base station and each cooperative communication base station. The appearance of this implementation is schematically shown in Fig. 5. Fig. 5 assumes that the base station 202 serves as a serving base station for the user device 416 and that the base stations 200 and 204 serve as cooperative communication base stations for the user device 416. It is also assumed that the cooperative communication base station 200 employs closed-loop single-layer precoding as its downlink data transmission method and has four transmitting antennas configured therefor and that the cooperative communication base station 204 employs beamforming transmission as its downlink data transmission method and has four transmitting antennas configured therefor.

In general, the user device 416 obtains system information regarding the serving base station through the broadcast channel of the serving base station 202, and the system information contains at least information regarding the installation of four transmitting antennas at the base station 202. This is a step that must be carried out in the case of cellular communication and, as such, is not described here in detail.

In Fig. 5, the user device 416 obtains system information regarding each of the base stations 200 and 204 in accordance with the configuration information (contained in the downlink control signal 620) of the downlink control signal transmitted in Step 505, and the system information contains at least information regarding the installation of four transmitting antennas at each of the base stations 200 and 204.

After that, the user device 416 obtains channel state information (indicated by a reference signal detecting process 606) regarding the serving base station and each cooperative communication base station by detecting downlink reference signals from the serving base station 202, the cooperative communication base station 200, and the base station 204.

Applied Example 3: The user device obtains system information regarding the serving base station and containing at least information regarding the installation of antennas at the serving base station through the broadcast channel of the serving base station, and obtains system information regarding each cooperative communication base station and containing at least information regarding the installation of antennas at each cooperative communication base station in accordance with the configuration information of the downlink control signal transmitted in Step 505.

Then, the user device obtains channel state information regarding the serving base station and each cooperative communication base station in accordance with downlink reference signals from the serving base station and each cooperative communication base station. The appearance of this implementation is schematically shown in Fig. 6. Fig. 6 assumes that the base station 202 serves as a serving base station for the user device 416 and that the base stations 200 and 204 serve as cooperative communication base stations for the user device 416. It is also assumed that the serving base station 202 and the cooperative communication base stations 200 and 204 are accepted silently as being identical in downlink data transmission method to each other and that the serving base station 202 and the cooperative communication base stations 200 and 204 all employ closed-loop single-layer precoding. It should be noted that each of the cooperative communication base stations 200 and 204 has four transmitting antennas configured therefor.

In general, the user device 416 obtains system information regarding the serving base station through the broadcast channel of the serving base station 202, and the system information contains at least information regarding the installation of four transmitting antennas at the base station 202. This is a step that must be carried out in the case of cellular communication and, as such, is not described here in detail.

In Fig. 6, the user device 416 obtains system information regarding each of the base stations 200 and 204 in accordance with the configuration information (contained in the downlink control signal 640) of the downlink control signal transmitted in Step 505, and the system information contains at least information regarding the installation of four transmitting antennas at each of the base stations 200 and 204.

After that, the user device 416 obtains channel state information (indicated by a reference signal detecting process 606) regarding the serving base station and each cooperative communication base station by detecting downlink reference signals from the serving base station 202 and the cooperative communication base stations 200 and 204.

Applied Example 4: The user device obtains system information regarding the serving base station and containing at least information regarding the installation of antennas at the serving base station through the broadcast channel of the serving base station, and obtains system information regarding each cooperative communication base station and containing at least information regarding the installation of antennas at each cooperative communication base station in accordance with the configuration information of the downlink control signal transmitted in Step 505.

Then, the user device obtains channel state information regarding the serving base station and each cooperative communication base station in accordance with downlink reference signals from the serving base station and each cooperative communication base station. The appearance of this implementation is schematically shown in Fig. 7. Fig. 7 assumes that the base station 202 serves as a serving base station for the user device 416 and that the base stations 200 and 204 serve as cooperative communication base stations for the user device 416. It is also assumed that the serving base station 202 and the cooperative communication base stations 200 and 204 are accepted silently as being identical in downlink data transmission method to each other and that the serving base station 202 and the cooperative communication base stations 200 and 204 all employ single-layer multi-user MIMO. The user devices 416, 410, 430 constitute a single multi-user group. It should be noted that each of the cooperative communication base stations 200 and 204 has four transmitting antennas configured therefor.

In general, the user device 416 obtains system information regarding the serving base station through the broadcast channel of the serving base station 202, and the system information contains at least information regarding the installation of four transmitting antennas at the base station 202. This is a step that must be carried out in the case of cellular communication and, as such, is not described here in detail.

In Fig. 7, the user device 416 obtains system information regarding each of the base stations 200 and 204 in accordance with the configuration information (contained in the downlink control signal 660) of the downlink control signal transmitted in Step 505, and the system information contains at least information regarding the installation of four transmitting antennas at each of the base stations 200 and 204.

After that, the user device 416 obtains channel state information (indicated by a reference signal detecting process 606) regarding the serving base station and each cooperative communication base station by detecting downlink reference signals from the serving base station 202 and the cooperative communication base stations 200 and 204.

It should be noted here that Applied Examples 1 to 4 above are embodiments where the user device obtains (i) system information regarding the serving base station and each cooperative communication base station and (ii) channel state information in the present invention. It should be noted that the user device's obtaining (i) system information regarding the serving base station and each cooperative communication base station and (ii) channel state information in the present invention should not be limited to Applied Examples 1 to 4 above.

Step 515: The user device feeds back channel state information regarding downlink channels between the user device and the serving base station and between the user device and each cooperative communication base station (feedback step).

It is preferable that the user device feed back channel state information regarding the serving base station and each cooperative communication base station only to the serving base station.

It is preferable that the user device feed back channel state information regarding the serving base station and each cooperative communication base station to the serving base station and each cooperative communication base station respectively.

The present embodiment is described below with reference to four applied examples.

Applied Example 1: The user device feeds back channel state information regarding the serving base station and each cooperative communication base station only to the serving base station. The appearance of this implementation is schematically shown in Fig. 4. Fig. 4 assumes that the base station 202 serves as a serving base station for the user device 416 and that the base stations 200 and 204 serve as cooperative communication base stations for the user device 416. It is also assumed that the transmission method by which the serving base station 202 transmits downlink data is closed-loop single-layer precoding, that the transmission method by which the cooperative communication base station 200 transmits downlink data is transmission diversity, and that the transmission method by which the cooperative communication base station 204 transmits downlink data is single-layer open-loop space-division multiplexing.

The respective transmission methods by which the cooperative communication base stations 200 and 204 transmit downlink data do not require feedback of channel state information from a user device. This makes it only necessary for the user device 416 to transmit channel state information regarding the serving base station 202 only to the serving base station 202 (as indicated by a feedback process 700).

Applied Example 2: The user device feeds back channel state information regarding the serving base station and each cooperative communication base station to that cooperative communication base station. The appearance of this implementation is schematically shown in Fig. 5. Fig. 5 assumes that the base station 202 serves as a serving base station for the user device 416 and that the base stations 200 and 204 serve as cooperative communication base stations for the user device 416. It is also assumed that the transmission method by which the serving base station 202 transmits downlink data is transmission diversity, that the transmission method by the cooperative communication base station 200 transmits downlink data is closed-loop single-layer precoding, and that the transmission method by which the cooperative communication base station 204 transmits downlink data is beamforming transmission.

The transmission method by which the serving base station 202 transmits downlink data does not require feedback of channel state information from a user device. This makes it only necessary for the user device 416 to transmit channel state information regarding the cooperative communication base stations 200 and 204 to the cooperative communication base stations 200 and 204 respectively (as indicated by feedback processes 710 and 712).

Applied Example 3: The user device feeds back channel state information regarding the serving base station and each cooperative communication base station to the serving base station and that cooperative communication base station respectively. The appearance of this implementation is schematically shown in Fig. 6. Fig. 6 assumes that the base station 202 serves as a serving base station for the user device 416 and that the base stations 200 and 204 serve as cooperative communication base stations for the user device 416. It is also assumed that the serving base station 202 and the cooperative communication base stations 200 and 204 are accepted silently as being identical in downlink data transmission method to each other and that the serving base station 202 and the cooperative communication base stations 200 and 204 all employ closed-loop single-layer precoding.

Because the respective transmission methods by which the serving base station 202 and the cooperative communication base stations 200 and 204 transmit downlink data require feedback of channel state information from a user device, the user device 416 transmits channel state information regarding the serving base station 202 and the cooperative communication base stations 200 and 204 to the serving base station 202 and the cooperative communication base stations 200 and 204 respectively (as indicated by feedback processes 720, 722, and 724).

Applied Example 4: The user device feeds back channel state information regarding the serving base station and each cooperative communication base station only to the serving base station. The appearance of this implementation is schematically shown in Fig. 7. Fig. 7 assumes that the base station 202 serves as a serving base station for the user device 416 and that the base stations 200 and 204 serve as cooperative communication base stations for the user device 416. It is also assumed that the serving base station 202 and the cooperative communication base stations 200 and 204 are accepted silently as being identical in downlink data transmission method to each other and that the serving base station 202 and the cooperative communication base stations 200 and 204 all employ single-layer multi-user MIMO. The user devices 416, 410, 430 constitute a single multi-user group.

Because the respective transmission methods by which the serving base station 202 and the cooperative communication base stations 200 and 204 transmit downlink data require feedback of channel state information from a user device, the user device 416 transmits channel state information regarding the serving base station 202 and the cooperative communication base stations 200 and 204 to the serving base station 202 (as indicated by a feedback process 730).

It should be noted here that Applied Examples 1 to 4 above are embodiments where the user device feeds back channel state information regarding the serving base station and each cooperative communication base station in the present invention. It should be noted that the way in which the user device feeds back channel state information regarding downlink channels from the serving base station and each cooperative communication base station in the present invention should not be limited to those of Applied Examples 1 to 4 above.

Step 520: The serving base station obtains channel state information regarding downlink channels from the serving base station and each cooperative communication base station to the user device and carries out resource scheduling and backhaul communications.

It is preferable that the serving base station obtain channel state information necessary for resource allocation in accordance with feedback from the user device.

It is preferable that each cooperative communication base station transmit, to the serving base station by means of backhaul communications, channel state information necessary for the serving base station to carry out resource allocation.

It is preferable that the backhaul communications contain data that is transmitted from the serving base station to each cooperative communication base station, the data containing at least a resource scheduling result and downlink communication data.

The present embodiment is described below with reference to four applied examples.

Applied Example 1: The serving base station obtains channel state information necessary for resource allocation in accordance with feedback from the user device. The appearance of this implementation is schematically shown in Fig. 4. Fig. 4 assumes that the base station 202 serves as a serving base station for the user device 416 and that the base stations 200 and 204 serve as cooperative communication base stations for the user device 416. It is also assumed that the transmission method by which the serving base station 202 transmits downlink data is closed-loop single-layer precoding, that the transmission method by which the cooperative communication base station 200 transmits downlink data is transmission diversity, and that the transmission method by which the cooperative communication base station 204 transmits downlink data is single-layer open-loop space-division multiplexing.

The user device 416 transmits channel state information regarding the serving base station 202 to the serving base station 202 (as indicated by the feedback process 700). Accordingly, the serving base station 202 obtains channel state information necessary for resource allocation in accordance with feedback from the user device. On completion of resource scheduling, the serving base station 202 transmits at least a resource scheduling result and downlink communication data to the cooperative communication base stations 200 and 204 by means of backhaul communications (X2 interfaces 300 and 304).

Applied Example 2: Each cooperative communication base station transmits, to the serving base station by means of backhaul communications, channel state information necessary for the serving base station to carry out resource allocation. The appearance of this implementation is schematically shown in Fig. 5. Fig. 5 assumes that the base station 202 serves as a serving base station for the user device 416 and that the base stations 200 and 204 serve as cooperative communication base stations for the user device 416. It is also assumed that the transmission method by which the serving base station 202 transmits downlink data is transmission diversity, that the transmission method by which the cooperative communication base station 200 transmits downlink data is closed-loop single-layer precoding, and that the transmission method by which the cooperative communication base station 204 transmits downlink data is beamforming transmission.

The user device 416 needs to transmit channel state information regarding the cooperative communication base stations 200 and 204 to the cooperative communication base stations 200 and 204 respectively (as indicated by the feedback processes 710 and 712).

After that, the cooperative communication base stations 200 and 204 transmit, to the serving base station 202 by means of backhaul communications (X2 interfaces 300 and 304), information fed back from the user device 416, i.e., channel state information necessary for the serving base station 202 to carry out resource allocation, respectively. On completion of resource scheduling, the serving base station 202 transmits at least a resource scheduling result and downlink communication data to the cooperative communication base stations 200 and 204 by means of the backhaul communications (X2 interfaces 300 and 304).

Applied Example 3: Each cooperative communication base station transmits, to the serving base station by means of backhaul communications, channel state information necessary for the serving base station to carry out resource allocation. The appearance of this implementation is schematically shown in Fig. 6. Fig. 6 assumes that the base station 202 serves as a serving base station for the user device 416 and that the base stations 200 and 204 serve as cooperative communication base stations for the user device 416. It is also assumed that the serving base station 202 and the cooperative communication base stations 200 and 204 are accepted silently as being identical in downlink data transmission method to each other and that the serving base station 202 and the cooperative communication base stations 200 and 204 all employ closed-loop single-layer precoding.

The user device 416 transmits channel state information regarding the serving base station 202 and the cooperative communication base stations 200 and 204 to the serving base station 202 and the cooperative communication base stations 200 and 204 respectively (as indicated by the feedback processes 720, 722, and 724). Then, the cooperative communication base stations 200 and 204 transmit, to the serving base station 202 by means of backhaul communications (X2 interfaces 300 and 304), information fed back from the user device 416, i.e., channel state information necessary for the serving base station 202 to carry out resource allocation, respectively.

On completion of resource scheduling, the serving base station 202 transmits at least a resource scheduling result and downlink communication data to the cooperative communication base stations 200 and 204 by means of the backhaul communications (X2 interfaces 300 and 304).

Applied Example 4: The serving base station obtains channel state information necessary for resource allocation in accordance with feedback from the user device. The appearance of this implementation is schematically shown in Fig. 7. Fig. 7 assumes that the base station 202 serves as a serving base station for the user device 416 and that the base stations 200 and 204 serve as cooperative communication base stations for the user device 416. It is also assumed that the serving base station 202 and the cooperative communication base stations 200 and 204 are accepted silently as being identical in downlink data transmission method to each other and that the serving base station 202 and the cooperative communication base stations 200 and 204 all employ single-layer multi-user MIMO.

The user devices 416, 410, 430 constitute a single multi-user group. The user device 416 needs to transmit channel state information regarding the serving base station 202 and the cooperative communication base stations 200 and 204 to the serving base station 202 (as indicated by the feedback process 730). Accordingly, the serving base station 202 obtains channel state information necessary for resource allocation in accordance with feedback from the user device.

On completion of resource scheduling, the serving base station 202 transmits at least a resource scheduling result and downlink communication data to the cooperative communication base stations 200 and 204 by means of the backhaul communications (X2 interfaces 300 and 304).

It should be noted here that Applied Examples 1 to 4 above are embodiments where the serving base station obtains information regarding the state of channels from the user device to the serving base station and each cooperative communication base station and carries out resource scheduling and backhaul communications in the present invention. It should be noted that the way in which the serving base station obtains channel state information regarding downlink channels from the serving base station and each cooperative communication base station to the user device and carries out resource scheduling and backhaul communications in the present invention should not be limited to those of Applied Examples 1 to 4 above.

Step 525: The serving base station or each cooperative communication base station transmits a downlink resource allocation instruction to the user device through a downlink wireless interface.

It is preferable that the serving base station transmit a downlink resource allocation instruction to the user device and that the allocation instruction contain at least downlink resource block assignment information and precoding information necessary for the serving base station to transmit data.

It is preferable that the serving base station transmit a downlink resource allocation instruction to the user device and that the allocation instruction contain at least downlink resource block assignment information, precoding information necessary for the serving base station to transmit data, and precoding information necessary for each cooperative communication base station to transmit data.

It is preferable that the serving base station and each cooperative communication base station transmit downlink resource allocation instructions to the user device, respectively, and that each of the downlink resource allocation instructions contain at least downlink resource block assignment information and precoding information necessary for the base station to transmit data.

The present embodiment is described below with reference to four applied examples.

Applied Example 1: The serving base station transmits a downlink resource allocation instruction to a user device, and the allocation instruction contains at least downlink resource block assignment information and precoding information necessary for the serving base station to transmit data. The appearance of this implementation is schematically shown in Fig. 4. Fig. 4 assumes that the base station 202 serves as a serving base station for the user device 416 and that the base stations 200 and 204 serve as cooperative communication base stations for the user device 416.

It is also assumed that the transmission method by which the serving base station 202 transmits downlink data is closed-loop single-layer precoding, that the transmission method by which the cooperative communication base station 200 transmits downlink data is transmission diversity, and that the transmission method by which the cooperative communication base station 204 transmits downlink data is single-layer open-loop space-division multiplexing. Further, the serving base station and the cooperative communication base stations transmit data of the same single layer to form space diversity among the base stations.

It is easily conceivable here that the cooperative communication base stations play a peripheral role to enhance the reception quality of a signal transmitted by the serving base station. Therefore, neither of the cooperative communication base stations has transmitted any precoding information. Accordingly, the serving base station 202 transmits to the user device 416 a downlink resource allocation instruction (instruction 608) containing downlink resource block assignment information and precoding information necessary for the serving base station 202 to transmit data.

Applied Example 2: The serving base station and each cooperative communication base station transmit downlink resource allocation instructions to the user device, respectively, and each of the downlink resource allocation instructions contains at least downlink resource block assignment information and precoding information necessary for the base station to transmit data. The appearance of this implementation is schematically shown in Fig. 5. Fig. 5 assumes that the base station 202 serves as a serving base station for the user device 416 and that the base stations 200 and 204 serve as cooperative communication base stations for the user device 416.

It is also assumed that the transmission method by which the serving base station 202 transmits downlink data is transmission diversity, that the transmission method by which the cooperative communication base station 200 transmits downlink data is closed-loop single-layer precoding, and that the transmission method by which the cooperative communication base station 204 transmits downlink data is beamforming transmission. The serving base station and the cooperative communication base stations transmit data of the same single layer to form space diversity among the base stations.

It is easily conceivable here that the cooperative communication base stations transmit data precoding information. Accordingly, the serving base station 202 and the cooperative communication base stations 200 and 204 transmit downlink resource allocation instructions (instructions 624, 628, and 626) to the user device 416, respectively, and each of the downlink resource allocation instructions contains downlink resource assignment information and precoding information necessary for the base stations 200, 202, or 204 to transmit data.

Applied Example 3: The serving base station transmits a downlink resource allocation instruction to the user device. The allocation instruction contains at least downlink resource block assignment information, precoding information necessary for the serving base station to transmit data, and precoding information necessary for each cooperative communication base station to transmit data. The appearance of this implementation is schematically shown in Fig. 6. Fig. 6 assumes that the base station 202 serves as a serving base station for the user device 416 and that the base stations 200 and 204 serve as cooperative communication base stations for the user device 416.

It is also assumed that the serving base station 202 and the cooperative communication base stations 200 and 204 are accepted silently as being identical in downlink data transmission method to each other and that the serving base station 202 and the cooperative communication base stations 200 and 204 all employ closed-loop single-layer precoding. Further, the serving base station and the cooperative communication base stations transmit data of different single layers to form spatial multiplexing among the base stations.

It is easily conceivable that both the serving base station and the cooperative communication base stations transmit data precoding information. Accordingly, the serving base station 202 transmits to the user device 416 an allocation instruction (instruction 644) containing downlink resource assignment information, precoding information necessary for the serving base station 202 to transmit data, and precoding information necessary for the cooperative communication base stations 200 and 204 to transmit data.

Applied Example 4: The serving base station transmits a downlink resource allocation instruction to the user device. The allocation instruction contains at least downlink resource block assignment information, precoding information necessary for the serving base station to transmit data, and precoding information necessary for each cooperative communication base station to transmit data.

Fig. 7 assumes that the base station 202 serves as a serving base station for the user device 416 and that the base stations 200 and 204 serve as cooperative communication base stations for the user device 416. It is also assumed that the serving base station 202 and the cooperative communication base stations 200 and 204 are accepted silently as being identical in downlink data transmission method to each other and that the serving base station 202 and the cooperative communication base stations 200 and 204 all employ single-layer multi-user MIMO. The user devices 416, 410, 430 constitute a single multi-user group. The serving base station and the cooperative communication base stations transmit data of the same single layer with respect to a single user to form space diversity among the base stations.

It is easily conceivable here that both the serving base station and the cooperative communication base stations transmit data precoding information. Accordingly, the serving base station 202 transmits to the user device 416 a downlink resource allocation instruction (instruction 664) containing downlink resource block assignment information, precoding information necessary for the serving base station 202 to transmit data, and precoding information necessary for the cooperative communication base stations 200 and 204 to transmit data.

The cooperative communication base station 200 transmits to the user device 416 a downlink resource allocation instruction (instruction 668) containing downlink resource block assignment information, precoding information necessary for the cooperative communication base station 200 to transmit data, and precoding information necessary for the serving base station 202 and the cooperative communication base station 204 to transmit data.

Further, the cooperative communication base station 204 transmits to the user device 416 a downlink resource allocation instruction (instruction 666) containing downlink resource block assignment information, precoding information necessary for the cooperative communication base station 204 to transmit data, and precoding information necessary for the cooperative communication base station 200 and the serving base station 202 to transmit data.

It should be noted here that Applied Examples 1 to 4 above are embodiments where the user device obtains a downlink resource allocation instruction in the present invention. It should be noted that the way in which the user device obtains a downlink resource allocation instruction in the present invention should not be limited to those of Applied Examples 1 to 4 above.

After that, the serving base station and the cooperative communication base stations transmit downlink data to the user device by the transmission method notified to the user device. The user device uses a plurality of antennas to receive the downlink data transmitted from these base stations, respectively.

Fig. 8 is a diagram schematically showing a base station that utilizes a method for cooperative communications among multiple multi-antenna base stations for a cellular system downlink according to an embodiment of the present invention.

As shown in Fig. 8, a base station 200/202/204 according to an embodiment of the present invention includes a user device parameter memory 211, a unit (specifying unit) 212 for determining cooperation among multiple multi-antenna base stations, a downlink control signal transmitting unit (link control information transmitting unit) 213, a downlink resource allocation (scheduling) instruction unit 215, and a resource scheduling unit 214.

The user device parameter memory 211 of the base station 200/202/204 stores therein parameters regarding a user device. The "parameters regarding a user device" include at least one of the following: the geographical position of the user device; the path loss (spatial propagation loss of a wireless signal between the base station and the user device) in the user device; and the status of a downlink communication data transmission buffer memory (not illustrated) of the user device. However, the "parameters regarding a user device" should not be limited as described above. It should be noted that the "status of a downlink communication data transmission buffer memory of the user device" means, for example, the amount of downlink communication data stored in a transmission buffer memory in which downlink data to be transmitted to the user device is stored.

The unit 212 for determining cooperation among multiple multi-antenna base stations determines, in accordance with the parameters regarding a user device, stored in the user device parameter memory 211, whether or not the user device is in an operation mode of cooperation communications among multiple multi-antenna base stations. The operation mode means an inter-base station cooperative communication mode to transmit downlink communication data to the user device through a plurality of base stations including the serving base station. In other words, the determining unit 212 specifies a target user device that is a user device to which inter-base station cooperative communication downlink communication data is to be transmitted at that point of time. It should be noted that in the following description, the target user device is referred to simply as "user device" unless otherwise noted.

Moreover, the unit 212 for determining cooperation among multiple multi-antenna base stations associates at least one cooperative communication base station with the user device specified and generates configuration information indicative of the association. There are no particular limits on how to associate at least one cooperative communication base station with the user device. For example, it is only necessary to select, from among a plurality of cells adjacent to the cell to which the serving base station belongs, a predetermined number of cells as counted from the cell nearest to the user device, so that the base stations put in the selected cells serve as cooperative communication base stations.

The downlink control signal transmitting unit 213 is used in configuring the base station 200/202/204 for the mode of cooperation among multiple multi-antenna base stations with respect to the user device.

The resource scheduling unit 214 receives from the user device a channel (propagation path) state information regarding a downlink channel necessary for resource scheduling and schedules resources in accordance with the channel state information. The channel state information is, for example, information indicative of a preferred transmission mode computed by the user device (a spatial multiplexing order, transmission rate information that can be received by the user device, etc.).

Specifically, the resource scheduling unit 214 uses the channel state information thus received to generate precoding information for compensating for channel deterioration of the user device serving as a receiver. Further, the resource scheduling unit 214 computes favorable downlink resource block assignment information for the target user device from the channel state information according to a predefined algorithm.

Further, the resource scheduling unit 214 carries out background communication through an X2 interface to transmits downlink resource block assignment information and downlink communication data from each cooperative communication base station to the target user device to that cooperative communication base station. At this point in time, the base stations 200, 202, and 204 communicate with one another through X2 interfaces.

The downlink resource allocation instruction unit 215 transmits a downlink resource allocation instruction to the user device in accordance with downlink resource block assignment information computed by the resource scheduling unit 214 for the target user device. The allocation instruction contains at least the downlink resource block assignment information assigned to the target user device, precoding information necessary for the serving base station to transmit data, and precoding information necessary for each cooperative communication base station to transmit data. The downlink resource block assignment information and the precoding information are those either computed or generated by the resource scheduling unit 214.

In other words, the downlink resource allocation instruction unit 215 transmits transmission-related information containing a result of downlink resource allocation to the user device in accordance with a result of resource scheduling by the resource scheduling unit 214.

According to the present invention, as described above, a serving base station determines whether or not a user device is in an operation mode of cooperative communications among multiple multi-antenna base stations. If the serving base station determines that the user device is in an operation mode of cooperative communications among multiple multi-antenna base stations, the serving base station uses a downlink control signal (downlink control signaling) to make configuration for the user device. Then, the user device obtains and feeds back (i) system information regarding the serving base station and each cooperative communication base station and (ii) channel state information. Moreover, the serving base station obtains channel state information regarding downlink channels from the serving base station and each cooperative communication base station to the user device and carries out resource scheduling and backhaul communications. Finally, the user device obtains a downlink resource allocation instruction. The serving base station and each cooperative communication base station transmit data to the user device by using the method for cooperative communications among multiple multi-antenna base stations.

The present invention has advantages such as a wide range of applications, rational signaling, ease of realization, etc.

The present invention is not limited to the description of the embodiments above, but may be altered by a skilled person within the scope of the claims. An embodiment based on a proper combination of technical means disclosed in different embodiments is encompassed in the technical scope of the present invention.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

It should be noted that the present invention can also be expressed as follows: A method for cooperative communications among multiple multi-antenna base stations according to the present invention is a method for cooperative communications among multiple multi-antenna base stations in the downlink of a cellular system including at least one user device, a serving base station that provides services to the user station; and at least one cooperative communication base station, the method including the steps in which: the serving base station determines the presence or absence of a user device that is in an operation mode of cooperative communications among multiple multi-antenna base stations; the serving base station uses a downlink control signal to make configuration for a user device that is in the operation mode of cooperative communications among multiple multi-antenna base stations; the user device obtains system information regarding the serving base station and each cooperative communication base station and downlink channel state information necessary for resource allocation in accordance with the configuration; the user device feeds back to the serving base station the downlink channel state information necessary for the serving base station to allocate resources; the serving base station carries out resource scheduling in accordance with the downlink channel state information necessary for resource allocation and transmits at least a result of the resource scheduling and downlink communication data to each cooperative communication base station; and at least the serving base station transmits a downlink resource allocation instruction to the user device.

It is preferable that the serving base station determine the presence or absence of a user device that is in the operation mode of cooperative communications among multiple multi-antenna base stations in accordance with at least one of the following: the geographical position of the user device; the path loss in the user device; and the status of a downlink data buffer memory of the user device.

It is preferable that the downlink control signal contain configuration information and that the configuration information contain at least the cell number of each cooperative communication base station and a transmission method by which each cooperative communication base station transmits downlink data.

It is preferable that the downlink control signal contain configuration information and that the configuration information contain at least the cell number of each cooperative communication base station and information regarding the installation of antennas at each cooperative communication base station.

It is preferable that the system information as obtained by the user device regarding the serving base station and each cooperative communication base station contain at least information regarding the installation of antennas at the serving base station and each cooperative communication base station.

It is preferable that the user device obtain the system information regarding the serving base station through a broadcast channel of the serving base station and obtain the system information regarding each cooperative communication base station through a broadcast channel of that cooperative communication base station.

It is preferable that the user device obtain the system information regarding the serving base station through a broadcast channel of the serving base station and obtain the system information regarding each cooperative communication base station in accordance with the configuration information.

It is preferable that the user device feed back the downlink channel state information necessary for resource allocation only to the serving base station.

It is preferable that the user device feed back the downlink channel state information necessary for resource allocation to the serving base station and each cooperative communication base station.

It is preferable that the serving base station obtain the downlink channel state information necessary for resource allocation in accordance with feedback from the user device.

It is preferable that each cooperative communication base station transmit, to the serving base station by means of backhaul communications, the downlink channel state information necessary for the serving base station to carry out resource allocation.

It is preferable that the allocation instruction contain at least one of the following: the downlink resource assignment information; and precoding information necessary for the serving base station to transmit data.

It is preferable that the allocation instruction contain at least one of the following: the downlink resource assignment information; precoding information necessary for the serving base station to transmit data; and precoding information necessary for each cooperative communication base station to transmit data.

It is preferable that the downlink resource allocation instruction that is transmitted from the serving base station to the user device contain at least downlink resource allocation instructions that the serving base station and each cooperative communication base station transmit to the user device, respectively, and that each of the allocation instructions contain at least one of the following: downlink resource assignment information; and precoding information necessary for the base station to transmit data.

A base station according to the present invention is a base station that serves as a serving base station to realize cooperative communications among multiple multi-antenna base stations for a cellular system downlink together with at least one cooperative communication base station, the base station including: a determining unit that determines the presence or absence of a user device that is in an operation mode of cooperative communications among multiple multi-antenna base stations; a downlink control signal transmitting unit that uses a downlink control signal to make configuration for a user device that is in the operation mode of cooperative communications among multiple multi-antenna base stations; a resource scheduling unit that receives downlink channel state information necessary for resource allocation fed back from the user device, carries out resource scheduling in accordance with the channel state information, and transmits at least a result of the resource scheduling and downlink communication data to each cooperative communication base station; and an allocation instruction transmitting unit that transmits a downlink resource allocation instruction to the user device.

It is preferable that the determining unit determine the presence or absence of a user device that is in the operation mode of cooperative communications among multiple multi-antenna base stations in accordance with at least one of the following: the geographical position of the user device; the path loss in the user device; and the status of a downlink data buffer memory of the user device.

It is preferable that the downlink control signal contain configuration information and that the configuration information contain at least the cell number of each cooperative communication base station and a transmission method by which each cooperative communication base station transmits downlink data.

It is preferable that the downlink control signal contain configuration information and that the configuration information contain at least the cell number of each cooperative communication base station and information regarding the installation of antennas at each cooperative communication base station.

It is preferable that the resource scheduling unit obtain downlink channel state information necessary for resource allocation in accordance with feedback from the user device.

It is preferable that each cooperative communication base station transmit, to the serving base station by means of backhaul communications, downlink channel state information necessary for the serving base station to carry out resource allocation.

It is preferable that the allocation instruction contain at least one of the following: the downlink resource assignment information; and precoding information necessary for the serving base station to transmit data.

It is preferable that the allocation instruction contain at least one of the following: the downlink resource assignment information; precoding information necessary for the serving base station to transmit data; and precoding information necessary for each cooperative communication base station to transmit data.

It is preferable that each of the allocation instructions contain at least one of the following: downlink resource assignment information; and precoding information necessary for the base station to transmit data.

### Industrial Applicability

The present invention can be suitably applied to the downlink of a cellular system in which a plurality of base stations each having a plurality of transmitting and receiving antennas cooperatively communicate with one another to transmit downlink communication data to a mobile station.

### Reference Signs List

- 200: Cooperative communication base station
- 202: Serving base station
- 204: Cooperative communication base station
- 212: Unit for determining cooperation among multiple multi-antenna base stations (specifying unit)
- 213: Downlink control signal transmitting unit (link control information transmitting unit)
- 214: Resource scheduling unit
- 215: Allocation instruction unit
- 400 to 430: User device

## Claims

1. A method for cooperative communications among base stations for a cellular system downlink, the method comprising:
a first step in which a serving base station determines whether a user device is in a mode of cooperative communications among the base stations;
a second step in which the serving base station uses a downlink control signal to make configuration for the user device;
a third step in which the user device obtains (i) system information regarding the serving base station and a cooperative communication base station indicated by configuration information received and (ii) channel state information;
a fourth step in which the user device feeds back channel state information regarding downlink channels between the user device and the serving base station and between the user device and the cooperative communication base station;
a fifth step in which the serving base station carries out resource scheduling and backhaul communications in accordance with the channel state information thus fed back; and
a sixth step in which the user device receives an allocation instruction to allocate downlink resources.

2. The method as set forth in claim 1, wherein in the first step, the serving base station specifies the user device in accordance with at least one of the following: the geographical position of the user device; the path loss in the user device; and the amount of downlink communication data stored in a transmission buffer memory in which downlink communication data is stored.

3. The method as set forth in claim 1, wherein in the second step, the configuration information contains at least the cell number of the cooperative communication base station and a transmission method by which the cooperative communication base station transmits downlink communication data to the user device.

4. The method as set forth in claim 1, wherein in the second step, the configuration information contains at least the cell number of the cooperative communication base station and information regarding the installation of antennas at the cooperative communication base station.

5. The method as set forth in claim 1, wherein in the third step, the system information that is obtained by the user device regarding the serving base station and the cooperative communication base station contains at least information regarding the installation of antennas at both the serving base station and cooperative communication base station.

6. The method as set forth in claim 5, wherein in the third step, the user device obtains the system information regarding the serving base station through a broadcast channel of the serving base station and obtains the system information regarding the cooperative communication base station through a broadcast channel of the cooperative communication base station.

7. The method as set forth in claim 5, wherein in the third step, the user device obtains the system information regarding the serving base station through an broadcast channel of the serving base station and, in the second step, obtains the system information regarding the cooperative communication base station in accordance with the configuration information.

8. The method as set forth in claim 1, wherein in the fourth step, the user device feeds back the channel state information only to the serving base station.

9. The method as set forth in claim 1, wherein in the fourth step, the user device feeds back the channel state information to the serving base station and the cooperative communication base station respectively.

10. The method as set forth in claim 8, wherein in the fifth step, the serving base station receives the channel state information from the user device.

11. The method as set forth in claim 9, wherein in the fifth step, the cooperative communication base station transmits the channel state information to the serving base station through the backhaul communications.

12. The method as set forth in claim 1, wherein in the fifth step, the backhaul communications contain data that the serving base station transmits to the cooperative communication base station, the data containing at least a result of the resource scheduling and downlink communication data.

13. The method as set forth in claim 1, wherein in the sixth step, the user device receives the resource allocation instruction from the serving base station, the resource allocation instruction containing at least one of the following: information regarding the assignment of the downlink resources; and precoding information necessary for the serving base station to transmit data.

14. The method as set forth in claim 1, wherein in the sixth step, the user device receives the resource allocation instruction from the serving base station, the resource allocation instruction containing at least one of the following: information regarding the assignment of the downlink resources; precoding information necessary for the serving base station to transmit data; and precoding information necessary for the cooperative communication base station to transmit data.

15. The method as set forth in claim 1, wherein in the sixth step, the user device receives the resource allocation instruction from the serving base station and the cooperative communication base station, the resource allocation instruction containing at least one of the following: information regarding the assignment of the downlink resources; and precoding information necessary for the serving base station and the cooperative communication base station to transmit data.
